(19) Europäisches Patentamt
European Patent Office
Office européen des brevets

(11) **EP 4 779 720 A1**

(12) **EUROPEAN PATENT APPLICATION**
published in accordance with Art. 153(4) EPC


(43) Date of publication:
**22.07.2026 Bulletin 2026/30**

(21) Application number: **25852098.0**

(22) Date of filing: **04.08.2025**

(51) International Patent Classification (IPC):
***H01M 4/58*** *(2010.01)* ***H01M 10/052*** *(2010.01)*
***H01M 10/42*** *(2006.01)* ***G01N 21/35*** *(2014.01)*
***G01N 21/47*** *(2006.01)* ***H01M 4/02*** *(2006.01)*

(52) Cooperative Patent Classification (CPC):
**G01N 21/35; G01N 21/47; H01M 4/02; H01M 4/58; H01M 10/052; H01M 10/42;** Y02E 60/10

(86) International application number:
**PCT/KR2025/011576**

(87) International publication number:
**WO 2026/034923 (12.02.2026 Gazette 2026/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.08.2024 KR 20240105129**



(71) Applicant: **LG Energy Solution, Ltd.**
**Seoul 07335 (KR)**

(72) Inventors:
- **CHOI, Bumgyu**
  **Daejeon 34122 (KR)**
- **CHAE, Yeongseok**
  **Daejeon 34122 (KR)**
- **PARK, Se Ho**
  **Daejeon 34122 (KR)**

(74) Representative: **Hoffmann Eitle**
**Patent- und Rechtsanwälte PartmbB**
**Arabellastraße 30**
**81925 München (DE)**


(54) **POSITIVE ELECTRODE ACTIVE MATERIAL FOR LITHIUM SECONDARY BATTERY, AND LITHIUM SECONDARY BATTERY COMPRISING SAME**


(57) A positive electrode active material satisfying a specific parameter criterion for surface functional groups contained in the positive electrode active material is provided herein. A lithium secondary battery comprising the positive electrode active material is also provided herein. By introducing a parameter capable of evaluating the active material, the active material can be selected without separate evaluation of cells, thereby contributing to improving the development speed of cells. In addition, the lifespan of the secondary battery can be improved by improving the capacity retention rate of the positive electrode active material.


[FIGURE]

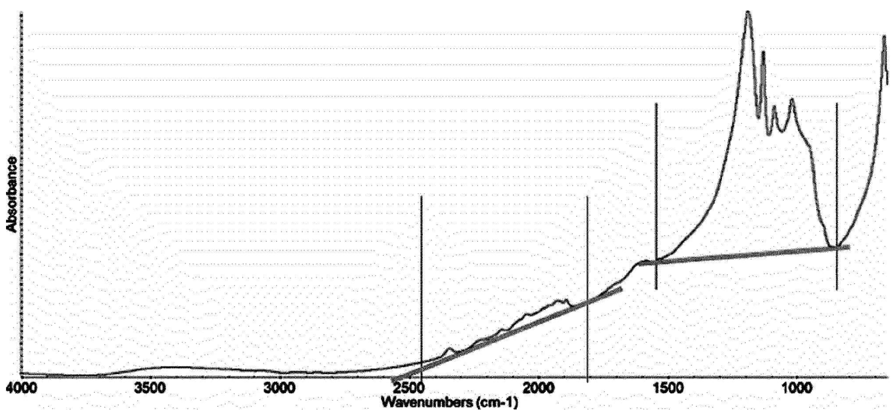





Processed by Luminess, 75001 PARIS (FR)

## Description

### Technical Field

The present application claims priority from Korean Patent Application No. 10-2024-0105129, filed August 7, 2024, the disclosures of which are incorporated herein by reference in their entirety.

### Technical Field

The present disclosure relates to a positive electrode active material for lithium secondary battery. Specifically, it relates to a positive electrode active material that satisfies specific parameter criteria for surface functional groups contained in the positive electrode active material. It also relates to a lithium secondary battery including the positive electrode active material.

### Background

Lithium iron phosphate (LFP, LiFePO4) as an active material is necessary to form a carbon coating to secure conductivity. To secure conductivity and optimize cell performance through the carbon coating process, uniform formation of the carbon coating layer, and control of carbon content and carbon functional groups are important.
LFP active materials have the advantage of being economical and having abundant basic raw materials compared to other active materials but have the disadvantage of relatively low electrical conductivity at room temperature. To overcome these shortcomings, efforts are being made to improve electrical conductivity by coating the surface of LFP active materials with conductive materials. An increase in the electrical conductivity of LFP active materials can lead to improvements in capacity rate (C-rate) characteristics and capacity.
Carbon coating is generally applied to improve the electrical conductivity of LFP active materials. In the carbon coating process of active materials, control of coating uniformity and surface properties is important. In particular, since the presence of oxidizing functional groups and undesirable functional groups on the surface of the carbon coating layer can significantly deteriorate the performance of the cell, it is necessary to establish standards for controlling functional groups on the surface of the carbon coating layer.

### Technical Problem

The purpose of the present disclosure is to provide a positive electrode active material that satisfies specific parameter criteria for surface functional groups contained in the positive electrode active material and a method for evaluating the same. Another object of the present disclosure is to provide a lithium secondary battery containing the positive electrode active material.

### Solution to Problem

According to one aspect of the present disclosure, a lithium iron phosphate (LFP, $LiFePO_4$) active material for a lithium secondary battery is provided, which satisfies Mathematical formulas 1 and 2:

[Mathematical Formula 1]

$$\text{Carbon functional group ratio} \leq 0.01$$

Carbon functional group ratio = (Carbon functional group IR peak area) / (LFP IR peak area) [Mathematical Formula 2]

wherein in Mathematical formula 2, the IR peak area is measured by Diffuse Reflectance Infrared Fourier Transform (DRIFT) mode, and the LFP IR peak is the P-O band.
According to one aspect, the absorption wavenumber of the carbon functional group may be 2500 to 1700 $cm^{-1}$, and the absorption wavenumber of the LFP (P-O) may be 1300 to 900 $cm^{-1}$.
According to one aspect, the carbon functional group may include C=C, C=O, C=N, C≡C or C≡N.
According to another aspect of the present disclosure, a method for evaluating a lithium iron phosphate (LFP, $LiFePO_4$) active material for a lithium secondary battery is provided, comprising the steps of measuring the active material by Diffuse Reflectance Infrared Fourier Transform (DRIFT) mode to calculate a carbon functional group ratio according to Mathematical formula 2, and confirming whether the carbon functional group ratio according to Mathematical formula 2 satisfies Mathematical formula 1:

[Mathematical Formula 1]

$$\text{Carbon functional group ratio} \leq 0.01$$

Carbon functional group ratio = (Carbon functional group IR peak area) / (LFP IR peak area) [Mathematical Formula 2]

According to another aspect of the present disclosure, a lithium secondary battery is provided, which comprises a lithium iron phosphate (LFP, $LiFePO_4$) active material for a lithium secondary battery as described above.

Specific details of other implementation examples according to the present disclosure are included in the detailed description below.

**Advantageous Effects**

According to the present disclosure, by introducing parameters capable of evaluating active materials, it is possible to select active materials without separate evaluation of cells, thereby contributing to improving cell development speed. In addition, the lifespan of a secondary battery can be improved by improving the capacity rate of the positive electrode active material.

**Brief Description of the Drawings**

FIGURE is an exemplary graph showing the detection of carbon functional groups according to an aspect.

**Detailed Description**

Terms or words used in this specification and claims should not be interpreted as limited to their usual or dictionary meanings, but should be interpreted as meanings and concepts that conform to the technical idea of the present disclosure, based on the principle that the inventor can appropriately define the concept of the term to explain his or her own disclosure in the best way. In addition, it should be understood that the configurations exemplified in the aspects described in this specification are only the most preferred aspects of the present disclosure and do not represent all the technical ideas of the present disclosure, and therefore, there may be various equivalents and modifications that can replace them at the time of filing this application.

Hereinafter, the active material for a lithium secondary battery according to the present disclosure will be described in detail.

One aspect of the present disclosure relates to a lithium iron phosphate (LFP, $LiFePO_4$) active material for a lithium secondary battery, which satisfies Mathematical formulas 1 and 2:

[Mathematical Formula 1]

$$\text{Carbon functional group ratio} \leq 0.01$$

Carbon functional group ratio = (Carbon functional group IR peak area) / (LFP IR peak area) [Mathematical Formula 2]

In the past, attempts were made to measure the carbon content using a CS analyzer to detect carbon functional groups contained in a coating layer of the positive electrode active material, and to evaluate the uniform formation of the carbon coating layer using SEM/TEM. The CS analyzer is a device that detects the content of carbon and sulfur generated by combusting the sample in an oxygen stream, with the positive electrode active material sample in the form of dried particles introduced together with an auxiliary combustion agent into a ceramic furnace of the CS analyzer commonly used in the field, and oxygen gas supplied in a high-frequency induction furnace to measure the content of C and S components contained in the sample. However, it is difficult to obtain sufficient information to analyze the coating layer formed with a very thin thickness on the surface of the active material using this method.

Accordingly, in the present disclosure, IR analysis was applied to analyze the carbon functional group contained in the coating layer of the positive electrode active material.

IR analysis methods can be broadly divided into attenuated total reflection (ATR), diffuse reflectance spectroscopy (DRIFT), and Transmission modes.

IR ATR mode is for analyzing infrared rays reflected from the sample surface. It is a method of transmitting infrared rays through special crystals such as diamond, ZnSe, Ge or the like, and measuring the total reflected spectrum from the contact interface between the infrared rays and the sample. IR ATR mode allows simple preparation of the sample and analysis with small sample amounts.

IR DRIFT mode is for analyzing infrared rays diffusely reflected from the sample surface. It can be applied to the sample with a rough surface or in powder form to analyze the chemical component through the infrared spectrum reflected from the sample.

IR Transmission mode is for measuring the amount of infrared radiation that passes through a sample transmitted without being absorbed by the sample. This requires manufacturing the sample thin enough to allow infrared rays to pass through the sample. IR Transmission mode can provide structural information of molecules through absorption spectra according to the characteristics of the sample.

Among these, the IR ART mode is applicable to various sample types and is widely used due to its advantages in sample preparation and analysis convenience. However, there is a problem in that it is often difficult to detect peaks depending on the absorption wavenumber when the positive electrode and negative electrode active materials used in the battery are materials with high IR absorption. Accordingly, in the present disclosure, the LFP active material was analyzed in IR DRIFT mode to detect a carbon functional group by comparing the peaks of the carbon functional group and the P-O band.

In the IR analysis results, the absorption peak wavelength region may vary depending on the functional group. Specifically, 4000 to 2500 $cm^{-1}$ is an absorption region caused by stretching motion of N-H, C-H or O-H single bonds, 3300 to 3600 $cm^{-1}$ is an absorption region for N-H or O-H bonds, around 3000 $cm^{-1}$ is an absorption region for C-H bonds, and 2500 to 2000 $cm^{-1}$ is an absorption region for stretching motion of triple bonds, where C≡C or C≡N bond absorption peaks appear. Also, 2000 to 1500 $cm^{-1}$ is an absorption region for C=O, C=N or C=C double bonds, and generally the absorption range of carbonyl group (C=O) is 1680 to 1750 $cm^{-1}$, and the C=C stretching motion can appear in a narrow range of 1640 to 1680 $cm^{-1}$. Below 1500 $cm^{-1}$ belongs to the fingerprint region. In this region, many absorptions can occur due to vibrations of various single bonds, such as C-C, C-O, C-N, and C-X.

In the present disclosure, the absorption wavenumber of the carbon functional group may be 2500 to 1700 $cm^{-1}$, and the absorption wavenumber of the P-O band may be 1300 to 900 $cm^{-1}$, for example. In this specific region, the carbon functional group can be detected by comparing the peaks of the carbon functional group and the P-O band. Since LFP active material has structural stability due to the strong covalent bond of phosphorus-oxygen (P-O) bond of olivine structure, the area representing LFP was based on the area of P-O band. Determination of baseline and absorption wavenumber range may vary depending on the characteristics of the sample.

According to another aspect of the present disclosure, a method for evaluating a lithium iron phosphate (LFP, $LiFePO_4$) active material for a lithium secondary battery is provided. Specifically, a method for evaluating an active material is provided, comprising the steps of measuring the active material by Diffuse Reflectance Infrared Fourier Transform (DRIFT) mode to calculate a carbon functional group ratio according to Mathematical formula 2, and confirming whether the carbon functional group ratio according to Mathematical formula 2 satisfies Mathematical formula 1:

[Mathematical Formula 1]

$$\text{Carbon functional group ratio} \leq 0.01$$

Carbon functional group ratio = (Carbon functional group IR peak area) / (LFP IR peak area) [Mathematical Formula 2]

In Mathematical formula 2, the LFP IR peak is for the P-O band. From the IR analysis results, the carbon functional group can be detected by comparing the peaks of the carbon functional group and the P-O band.

The carbon coating layer of the active material may contain various functional groups, such as carbon double bonds or triple bonds, depending on the degree of oxidation. Specifically, the carbon functional group may include C=C, C=O, C=N, C≡C or C≡N, for example. Since these functional groups are closely related to cell performance, high-precision detection of carbon functional groups is important in setting parameters for evaluating active materials.

According to another aspect of the present disclosure, a lithium secondary battery containing the lithium iron phosphate (LFP, $LiFePO_4$) active material as described above is provided.

Hereinafter, the present disclosure will be described in detail by way of examples to help understanding. However, the examples according to the present disclosure may be modified into various other forms, and the scope of the present disclosure should not be construed as being limited to the following examples. Examples of the present disclosure are provided to more completely explain the present disclosure to a person who has average knowledge in the art.

Example 1

A mixed solution of lithium iron phosphate (LFP) positive electrode active material precursor $LiFePO_4$ and conductive carbon precursor sucrose in a weight ratio of 1:0.75 was powdered using a spray pyrolysis process. The resulting powders were calcined at 715°C for 5 hours to produce a carbon-coated $LiFePO_4$ positive electrode active material.

Comparative Example 1

A mixed solution of the lithium iron phosphate (LFP) positive electrode active material precursor $LiFePO_4$ and the conductive carbon precursor sucrose prepared in the same manner as in Example 1 was powdered by a spray pyrolysis process. The resulting powders were calcined at 600°C for 5 hours to produce a carbon-coated $LiFePO_4$ positive electrode active material.

Comparative Example 2

A mixed solution of the lithium iron phosphate (LFP) positive electrode active material precursor $LiFePO_4$ and the conductive carbon precursor sucrose prepared in the same manner as in Example 1 was powdered by a spray pyrolysis process. The resulting powders were calcined at 500°C for 5 hours to produce a carbon-coated $LiFePO_4$ positive electrode active material.

Experimental Example 1: Characterization of the lifespan of active material

A positive electrode slurry was prepared by mixing each of the positive electrode active material according to Example and Comparative Examples, carbon black as a conductive agent, and polyvinylidene fluoride (PVdF) as a binder in a weight ratio of 85:10:5 in N-methyl pyrrolidone (NMP) as a solvent. The manufactured slurry was applied to an aluminum current collector, dried at 80°C, and then rolled to produce a positive electrode.

A porous polyethylene film was used as a separator, and lithium metal was used as a negative electrode. The electrolyte was prepared by dissolving 1.0 M lithium hexafluorophosphate ($LiPF_6$) in an organic solvent containing ethylene carbonate (EC), dimethyl carbonate (DMC), and diethyl carbonate (DEC) in a volume ratio of 1:1:1.

An exemplary graph showing the detection of carbon functional groups according to the IR DRIFT analysis results is shown in FIGURE. The area to be detected was calculated using software (OMNIC company) that can calculate the baseline and area for the detected spectrum. At this time, the baseline and absorption wavenumber range can be determined according to the characteristics of the sample. As shown in FIGURE, the carbon functional group ratio was calculated according to Mathematical formula 2 from the peaks corresponding to the absorption wavenumber of the carbon functional group at 2500 to 1700 $cm^{-1}$, and the absorption wavenumber of the LFP (P-O) at 1300 to 900 $cm^{-1}$.

Carbon functional group ratio = (Carbon functional group IR peak area) / (LFP IR peak area) [Mathematical Formula 2]

The calculated carbon functional group ratios are listed in Table 1.

[Table 1]

| | Carbon functional group ratio |
|---|---|
| Example 1 | 0.01 |
| Comparative Example 1 | 0.02 |
| Comparative Example 2 | 0.04 |

In addition, for each manufactured lithium secondary battery half-cell, the lifespan was characterized at a cut off voltage of 2.5 to 4.0 V and a charge/discharge rate of 1C, 2C, 3C, and 4C. The evaluation results of the capacity rate (C-rate) are shown in Table 2.

[Table 2]

| | Capacity Rate (%) | | | |
|---|---|---|---|---|
| C-rate | 1C | 2C | 3C | 4C |
| Example 1 | 81.3 | 75.0 | 70.0 | 67.5 |
| Comparative Example 1 | 62.5 | 18.1 | 0.6 | fail |
| Comparative Example 2 | fail | fail | fail | fail |

As can be seen from Tables 1 and 2, the capacity rate decreases when the carbon functional group ratio exceeds 0.01.

As described above, the method according to the present disclosure can provide an active material satisfying specific parameters. In addition, when the parameters of the present disclosure are satisfied, a secondary battery with improved capacity rate can be provided.

As described above, specific parts of the present disclosure have been described in detail, and it is obvious to those skilled in the art that such specific descriptions are merely preferred implementation examples and that the scope of the present disclosure is not limited thereto. Anyone with ordinary skill in the art to which the present disclosure pertains will be able to make various applications and modifications within the scope of the present disclosure based on the above contents. Accordingly, the substantial scope of the present disclosure will be defined by the appended claims and their equivalents.

## Claims

1. A positive electrode active material for a lithium secondary battery, comprising:

   a lithium iron phosphate (LFP, $LiFePO_4$) which satisfies Mathematical Formula 1 and Mathematical Formula 2:

   [Mathematical Formula 1]

   $$\text{Carbon functional group ratio} \leq 0.01$$

   Carbon functional group ratio = (Carbon functional group IR peak area) / (LFP IR peak area) [Mathematical Formula 2]

   wherein, in Mathematical formula 2, the carbon functional group IR peak area is measured by Diffuse Reflectance Infrared Fourier Transform (DRIFT) mode, and the LFP IR peak is a P-O band.

2. The positive electrode active material of claim 1, wherein an absorption wavenumber of the carbon functional group ranges from 2500 $cm^{-1}$ to 1700 $cm^{-1}$, and the absorption wavenumber of the lithium iron phosphate ranges from 1300 $cm^{-1}$ to 900 $cm^{-1}$.

3. The positive electrode active material of claim 1, wherein the carbon functional group includes C=C, C=O, C=N, C≡C, or C≡N.

4. A method for evaluating a lithium iron phosphate (LFP, $LiFePO_4$5. active material for a lithium secondary battery, comprising:

   measuring the lithium iron phosphate active material by Diffuse Reflectance Infrared Fourier Transform (DRIFT) mode so as to calculate a carbon functional group ratio according to Mathematical Formula 2, and confirming whether the carbon functional group ratio according to Mathematical Formula 2 satisfies Mathematical Formula 1:

   [Mathematical Formula 1]

   $$\text{Carbon functional group ratio} \leq 0.01$$

Carbon functional group ratio = (Carbon functional group IR peak area) / (LFP IR peak area). [Mathematical Formula 2]

5. The method of claim 4, wherein an absorption wavenumber of the carbon functional group ranges from 2500 $cm^{-1}$ to 1700 $cm^{-1}$, and an absorption wavenumber of the lithium iron phosphate ranges from 1300 $cm^{-1}$ to 900 $cm^{-1}$.

6. The method of claim 4, wherein the carbon functional group includes C=C, C=O, C=N, C≡C, or C≡N.

7. A lithium secondary battery comprising the positive electrode active material of claim 1.

[FIGURE]

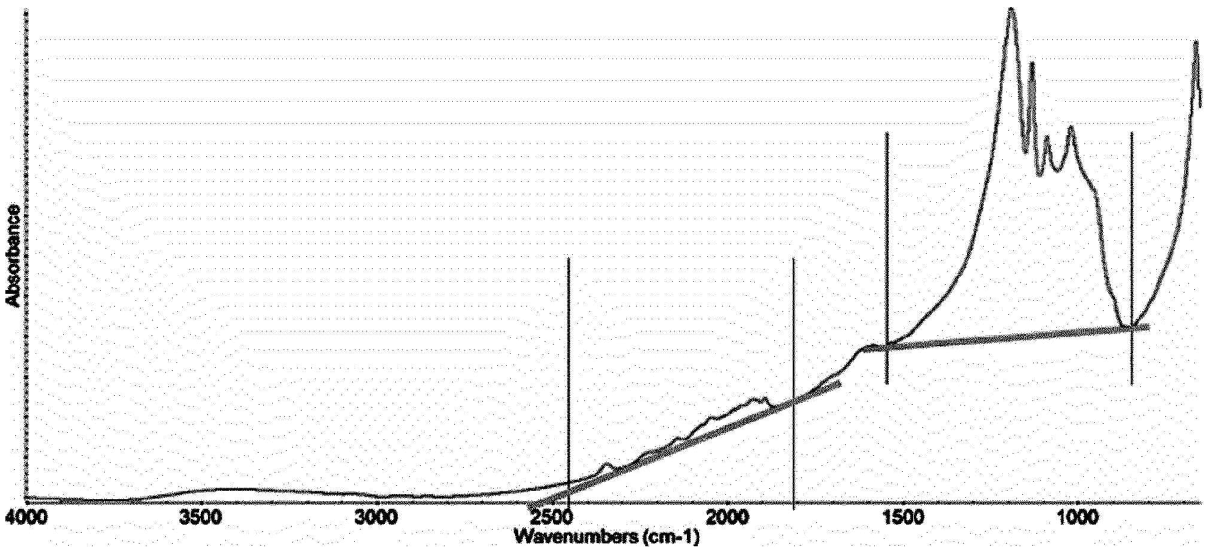
Absorbance
4000
3500
3000
2500
2000
1500
1000
Wavenumbers (cm-1)

**TRANSLATION**

**INTERNATIONAL SEARCH REPORT**

International application No.
**PCT/KR2025/011576**

**A. CLASSIFICATION OF SUBJECT MATTER**

**H01M 4/58**(2010.01)i; **H01M 10/052**(2010.01)i; **H01M 10/42**(2006.01)i; **G01N 21/35**(2006.01)i; **G01N 21/47**(2006.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/58(2010.01); C01B 25/45(2006.01); C01B 31/02(2006.01); C01B 32/168(2017.01); H01M 10/0525(2010.01); H01M 10/42(2006.01); H01M 4/36(2006.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 리튬 이차전지 (lithium secondary battery), 양극 활물질 (cathode material), 리튬인산철 (lithium iron phosphate), 카본 (carbon), 작용기 (functional group), 피크 면적 (peak area), IR 확산반사 (IR diffuse reflectance), 코팅 (coating)

**C. DOCUMENTS CONSIDERED TO BE RELEVANT**

| Category* | Citation of document, with indication, where appropriate, of the relevant passages | Relevant to claim No. |
|---|---|---|
| A | KR 10-2015-0108377 A (TORAY INDUSTRIES, INC.) 25 September 2015 (2015-09-25) claims 1, 9; paragraphs [0004], [0018], [0024], [0040]-[0045] | 1-7 |
| A | JP 2016-157684 A (TORAY IND. INC.) 01 September 2016 (2016-09-01) claims 1, 4; paragraphs [0006], [0016], [0043], [0044], [0065] | 1-7 |
| A | JP 2010-219036 A (MITSUBISHI CHEMICALS CORP.) 30 September 2010 (2010-09-30) abstract; claims 1-7 | 1-7 |
| A | KR 10-2317602 B1 (SK INNOVATION CO., LTD.) 25 October 2021 (2021-10-25) abstract; claims 1-3 | 1-7 |
| A | KR 10-2020-0033736 A (LG CHEM, LTD.) 30 March 2020 (2020-03-30) abstract; claims 1-18 | 1-7 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 November 2025** | **11 November 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**TRANSLATION**

## INTERNATIONAL SEARCH REPORT
**Information on patent family members**

International application No.
**PCT/KR2025/011576**

| Patent document cited in search report | Publication date (day/month/year) | Patent family member(s) | Publication date (day/month/year) |
|---|---|---|---|
| KR 10-2015-0108377 A | 25 September 2015 | CA 2894517 A1 | 31 July 2014 |
| | | CA 2894517 C | 19 October 2021 |
| | | CN 104937755 A | 23 September 2015 |
| | | EP 2950374 A1 | 02 December 2015 |
| | | EP 2950374 A4 | 28 September 2016 |
| | | EP 2950374 B1 | 28 August 2019 |
| | | JP 6256337 B2 | 10 January 2018 |
| | | KR 10-2247250 B1 | 03 May 2021 |
| | | TW 201444157 A | 16 November 2014 |
| | | TW I577075 B | 01 April 2017 |
| | | US 10374223 B2 | 06 August 2019 |
| | | US 2015-0333320 A1 | 19 November 2015 |
| | | WO 2014-115669 A1 | 31 July 2014 |
| JP 2016-157684 A | 01 September 2016 | JP 6623804 B2 | 25 December 2019 |
| JP 2010-219036 A | 30 September 2010 | CN 102326283 A | 18 January 2012 |
| | | CN 102326283 B | 15 October 2014 |
| | | EP 2400586 A1 | 28 December 2011 |
| | | EP 2400586 A4 | 19 October 2016 |
| | | EP 2400586 B1 | 01 April 2020 |
| | | JP 5625381 B2 | 19 November 2014 |
| | | KR 10-1642887 B1 | 26 July 2016 |
| | | KR 10-2011-0118790 A | 01 November 2011 |
| | | US 2012-0070733 A1 | 22 March 2012 |
| | | US 8647776 B2 | 11 February 2014 |
| | | WO 2010-095716 A1 | 26 August 2010 |
| KR 10-2317602 B1 | 25 October 2021 | CN 114597352 A | 07 June 2022 |
| | | CN 115241414 A | 25 October 2022 |
| | | EP 4080606 A1 | 26 October 2022 |
| | | EP 4080606 B1 | 26 February 2025 |
| | | US 11637279 B2 | 25 April 2023 |
| | | US 12132198 B2 | 29 October 2024 |
| | | US 12355066 B2 | 08 July 2025 |
| | | US 2022-0367851 A1 | 17 November 2022 |
| | | US 2023-0105644 A1 | 06 April 2023 |
| | | US 2023-0197934 A1 | 22 June 2023 |
| | | US 2025-0293238 A1 | 18 September 2025 |
| KR 10-2020-0033736 A | 30 March 2020 | CN 112088453 A | 15 December 2020 |
| | | CN 112088453 B | 24 November 2023 |
| | | EP 3767715 A1 | 20 January 2021 |
| | | EP 3767715 A4 | 30 June 2021 |
| | | EP 3767715 B1 | 01 November 2023 |
| | | ES 2972060 T3 | 11 June 2024 |
| | | HU E064994 T2 | 28 April 2024 |
| | | JP 2021-517110 A | 15 July 2021 |
| | | JP 7167299 B2 | 08 November 2022 |
| | | KR 10-2025-0088696 A | 17 June 2025 |
| | | KR 10-2854271 B1 | 03 September 2025 |
| | | US 12191477 B2 | 07 January 2025 |
| | | US 2021-0036306 A1 | 04 February 2021 |
| | | US 2025-0046787 A1 | 06 February 2025 |

Form PCT/ISA/210 (patent family annex) (July 2022)

**TRANSLATION**

**INTERNATIONAL SEARCH REPORT**
**Information on patent family members**

International application No.
**PCT/KR2025/011576**

| Patent document cited in search report | Publication date (day/month/year) | Patent family member(s) | Publication date (day/month/year) |
| --- | --- | --- | --- |
| | | WO 2020-060084 A1 | 26 March 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020240105129